(19) **Europäisches Patentamt**

**European Patent Office**

**Office européen des brevets**

(11) **EP 1 108 164 B1**

(12) **EUROPÄISCHE PATENTSCHRIFT**

(45) Veröffentlichungstag und Bekanntmachung des Hinweises auf die Patenterteilung:
**12.06.2002 Patentblatt 2002/24**

(51) Int Cl.$^7$: **F16H 61/02**, F16D 48/06, F16H 61/14, F16H 61/06

(21) Anmeldenummer: **99942828.7**

(22) Anmeldetag: **10.08.1999**

(86) Internationale Anmeldenummer:
**PCT/EP99/05784**

(87) Internationale Veröffentlichungsnummer:
**WO 00/14434 (16.03.2000 Gazette 2000/11)**

(54) **VERFAHREN ZUM STEUERN UND REGELN EINER KUPPLUNG**

METHOD FOR CONTROLLING AND REGULATING A COUPLING

PROCEDE POUR COMMANDER ET REGULER UN EMBRAYAGE

(84) Benannte Vertragsstaaten:
**DE FR GB IT**

(30) Priorität: **05.09.1998 DE 19840572**

(43) Veröffentlichungstag der Anmeldung:
**20.06.2001 Patentblatt 2001/25**

(73) Patentinhaber: **ZF FRIEDRICHSHAFEN Aktiengesellschaft 88038 Friedrichshafen (DE)**

(72) Erfinder:
• **FOTH, Joachim
  D-88239 Wangen (DE)**
• **VOHMANN, Martin
  D-73730 Esslingen (DE)**
• **DREIBHOLZ, Ralf
  D-88074 Meckenbeuren (DE)**

(56) Entgegenhaltungen:
DE-A- 3 935 438          US-A- 4 805 750

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Verfahren zum Steuern und Regeln einer Kupplung in einem Kraftfahrzeugantrieb, bei dem ein elektronisches Steuergerät mittels eines Regelkreises das Verhalten der Kupplung bestimmt.

Unter Kupplung im Sinne der Erfindung ist eine Anfahrkupplung zu verstehen. Hierunter fallen Kupplungen, die zwischen einer Brennkraftmaschine und einem Automatgetriebe angeordnet sind, Wandlerüberbrükkungskupplungen als auch im Automatgetriebe integrierte Kupplungen, die sowohl zum Anfahren als auch als Schaltkupplung verwendet werden können.

Ein Verfahren zum Steuern einer Anfahrkupplung ist z. B. aus der DE 44 09 122 A1 bekannt. Die Anfahrsteuerung besteht hierbei aus zwei Phasen. In einer ersten Phase wird die Eingangsdrehzahl der Kupplung auf eine Soll-Drehzahl hingeführt, wobei die Soll-Drehzahl aus der Leistungsvorgabe des Fahrers bzw. dem Gradienten und einer Fahraktivität festgelegt wird. In der zweiten Phase wird die Differenz der Eingangs- zur Ausgangsdrehzahl der Kupplung nach einem Sollwert-Verlauf auf Null reduziert.

Aus der DE 39 37 976 A1 ist ein Verfahren zur Regelung einer Kupplung bekannt, die zur Schwingungsentkopplung dient.

Der Schlupf der Kupplung wird hierbei in Abhängigkeit einer am Getriebeausgang ermittelten Drehungleichförmigkeit verändert. Aus der EP 0 214 989 B2 wiederum ist es bekannt, eine im Automatgetriebe integrierte Kupplung als Anfahrelement zu verwenden.

Die DE 39 35 438 A1 offenbart ein Verfahren nach dem Oberbegriff des Anspruchs 1 und eine Anordnung zur Betätigung einer Kraftfahrzeug-Reibkupplung, wobei während verschiedener Fahrzustände die Steuereinrichtung abhängig vom Differenzdrehzahl-Istsignal gesteuert wird.

Aus der US 4,805,750 ist eine Schlupfregelung für eine Wandlerkupplung bei Wandlerautomatgetrieben bekannt. Dieser Schrift ist insbesondere eine Regelung für das Fahren mit konstanter Übersetzung (Steady State Operation) zu entnehmen.

Ausgehend vom zuvor beschriebenen Stand der Technik liegt der Erfindung die Aufgabe zugrunde, diesen im Hinblick auf die Mehrfachnutzung einer einzigen Kupplung in Verbindung mit einem Automatgetriebe weiterzuentwickeln.

Die Aufgabe wird erfindungsgemäß durch das Verfahren des unabhängigen Anspruchs gelöst. Zur Steuerung und Regelung der Kupplung während drei Fahrzuständen wird ein erster Regelkreis verwendet. Die Regelgröße entspricht dem Istwert der Differenzdrehzahl der Kupplung. Die drei Fahrzustände entsprechen hierbei einem Anfahrvorgang als erstem Zustand, dem Fahren mit konstanter Übersetzung als zweitem Zustand und einem dritten Zustand, der dann vorliegt, wenn nach Anspruch 1 eine Lastschaltung von einer ersten in eine zweite Übersetzungsstufe in einem automatisch lastschaltbaren Stufengetriebe initiiert wird.

Bei einer Lastschaltung im Sinne einer Überschneidungsschaltung nach Anspruch 1 bestimmt ein eigener Regelkreis, nachfolgend als zweiter Regelkreis bezeichnet, das Verhalten der zu- und abschaltenden Kupplungen. Während der Lastschaltung kommt es aufgrund der zu verzögernden bzw. zu beschleunigenden rotatorischen Massen zu einer Beeinflussung der Kupplung. Für diesen Fall, also dem dritten Zustand, wird erfindungsgemäß vorgeschlagen, daß der erste und zweite Regelkreis über ein Entkopplungsnetzwerk miteinander verbunden sind, wobei das Entkopplungsnetzwerk einen ersten und zweiten Signalweg aufweist. Wie bei Anspruch 4 ausgeführt, wirkt der zweite auf den ersten Regelkreis während der Lastschaltung ausschließlich in der Lastübernahme-, Gradienteinstell-, Gleit-, Gradientabbau- und Schließphase. Über das Entkopplungsnetzwerk wird somit der Vorteil erzielt, daß die beiden Regler sich in ihrer Wirkung nicht gegenseitig beeinflussen.

Für alle drei Zustände wird der Sollwert der Differenzdrehzahl der Kupplung aus der Addition eines Sollwert-Offset und einer gangabhängigen Differenzdrehzahl der Kupplung ermittelt. Die gangabhängige Differenzdrehzahl wird hierbei gemäß Anspruch 13 für einen Anfahrgang des Automatgetriebes über ein erstes Kennfeld bestimmt. Die gangabhängige Differenzdrehzahl für Nicht-Anfahrgänge, z. B. der fünfte Gang, des Automatgetriebes wird, wie in Anspruch 14 beschrieben, über zweite Kennfelder bestimmt. Sowohl das erste als auch die zweiten Kennfelder zeigen jeweils eine Zuordnung von Leistungsvorgabe des Fahrers und Abtriebsdrehzahl der Kupplung. Die Umschaltung zwischen dem ersten und einem zweiten Kennfeld erfolgt während der Lastschaltung des Automatgetriebes.

Die zweiten Kennfelder sind hierbei gemäß Anspruch 17 derart gestaltet, daß sich bei einer Fahrzeuggeschwindigkeit kleiner einem Grenzwert ein erhöhter Sollwert der Drehzahldifferenz ergibt. Hierdurch wird ein aktiver Abwürgeschutz für Nicht-Anfahrgänge, also z. B. dem vierten und fünften Gang, erzielt.

Die Erfindung ist nachstehend anhand des in den Zeichnungen dargestellten Ausführungsbeispiels für eine Lastschaltung nach Anspruch 1 erläutert.

Es zeigen:

Fig. 1 eine Übersicht des ersten und zweiten Regelkreises;

Fig. 2 Funktionsblock Sollwert-Vorgabe;

Fig. 3 Funktionsblock Regler;

Fig. 4 erstes Kennfeld für Anfahrgänge;

Fig. 5 zweites Kennfeld für Nicht-Anfahrgänge;

Fig. 6     Sollwert Differenzdrehzahl Lastschaltung über der Zeit;

Fig. 7     Sollwert Differenzdrehzahl gangabhängig über der Zeit und

Fig. 8     Sollwert Differenzdrehzahl Kupplung über der Zeit.

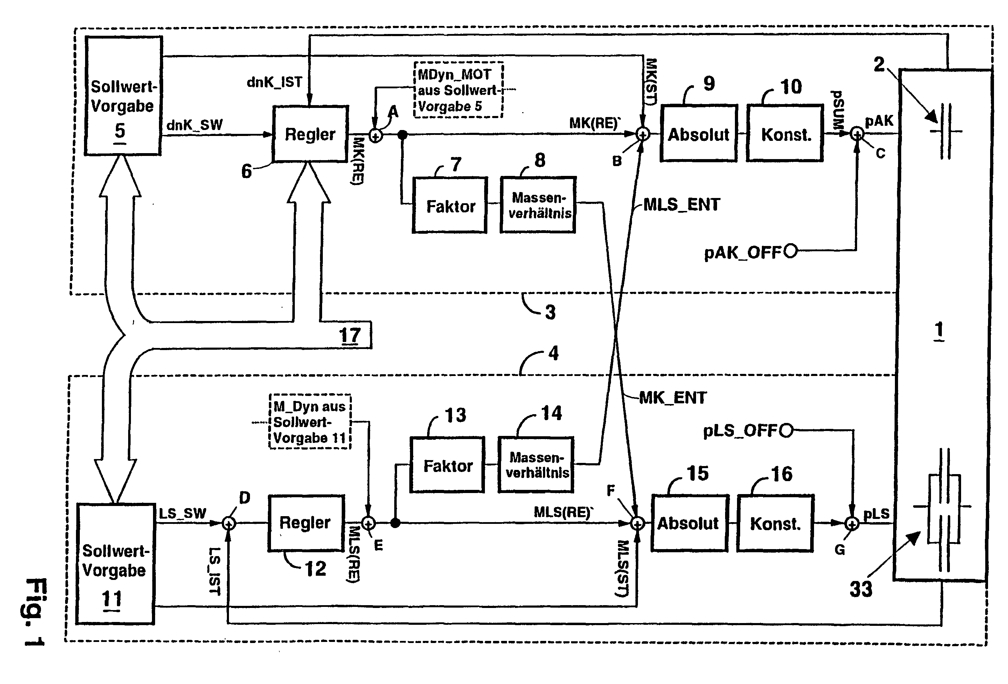

Fig. 1 zeigt eine Übersicht der beiden Regelkreise. Mit Bezugszeichen 3 ist der erste Regelkreis zur Steuerung und Regelung der Kupplung 2 bezeichnet. Mit Bezugszeichen 4 ist der zweite Regelkreis zur Steuerung und Regelung der Lastschaltung eines Automatgetriebes 1 bezeichnet. Unter Lastschaltung im Sinne der Erfindung ist eine Überschneidungsschaltung zu verstehen. Bekanntermaßen öffnet während der Überschneidungsschaltung eine erste Kupplung, während eine zweite Kupplung schließt. In Fig. 1 sind die beiden Kupplungen mit dem Bezugszeichen 33 dargestellt. Ein derartiges Verfahren ist aus der DE 44 24 456 A1 bekannt, die mit zum Offenbarungsgehalt dieser Anmeldung zählt.

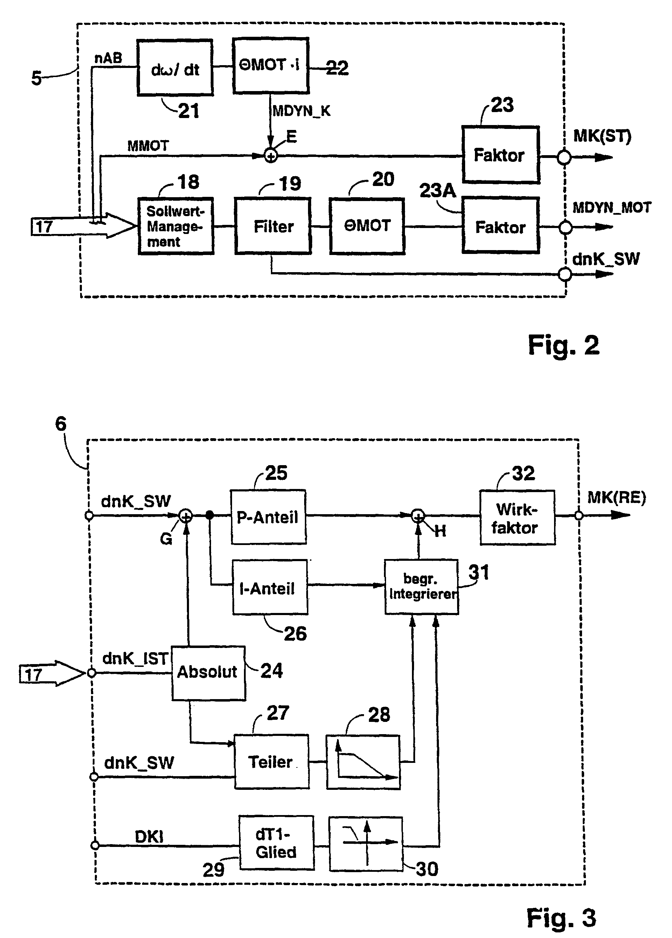

Unter Kupplung 2 im Sinne der Erfindung ist eine Anfahrkupplung zu verstehen. Diese kann dem Automatgetriebe 1 vorgeschaltet sein oder der Wandlerüberbrückungskupplung oder einer im Getriebe integrierten Kupplung entsprechen. Sowohl dem ersten als auch dem zweiten Regelkreis 3, 4 werden Eingangsgrößen 17 zugeführt. Eingangsgrößen 17 sind: das Signal der Leistungsvorgabe durch einen Fahrer, z. B. Drosselklappeninformation DKI bzw. deren Gradient, das Moment einer nicht dargestellten Brennkraftmaschine, welches das Automatgetriebe 1 antreibt und die Ein-/Ausgangsdrehzahl der Kupplung 2. Der erste Regelkreis 3 besteht aus den Blöcken: Sollwert-Vorgabe 5, Regler 6, Faktor 7, Massenverhältnis 8, Absolutwert 9 und Konstante 10. Die Sollwert-Vorgabe 5 liefert als Ausgangsgrößen den Sollwert der Differenzdrehzahl dnK_SW Kupplung 2 und das gesteuerte Moment MK(ST) der Kupplung 2 sowie das dynamische Motormoment MDYN_MOT. Die innere Struktur der Sollwert-Vorgabe 5 wird in Verbindung mit der Fig. 2 erklärt. Am Regler 6 liegen die Eingangsgrößen 17, der Sollwert dnK_SW der Differenzdrehzahl der Kupplung 2 sowie der Istwert dnK_IST der Differenzdrehzahl der Kupplung 2 an. Die innere Struktur des Reglers 6 wird in Verbindung mit der Fig. 3 erklärt. Ausgangsgröße des Reglers 6 ist das geregelte Moment MK(RE) der Kupplung 2. Aus dem geregelten Moment MK(RE) der Kupplung 2 und dem dynamischen Motormoment MDYN_MOT ergibt sich das geregelte Summenmoment MK(RE)', Summationspunkt A. Diese wird am Punkt B mit dem aus der Sollwert-Vorgabe 5 stammenden gesteuerten Moment MK(ST) der Kupplung 2 und dem entkoppelnden Moment der Lastschaltung MLS_ENT summiert. Von dieser Summe wird mittels des Funktionsblocks 9 der Absolutwert gebildet und das Ergebnis mit einer Konstanten gewichtet, Funktionsblock 10. Ausgangsgröße ist ein summierter Druck pSUM. Diesem summierten Druck pSUM wird am Summationspunkt C ein Druck-Offset pAK_OFF überlagert. Das sich hieraus ergebende Druckniveau pAK ist das auf die Kupplung 2 wirkende Druckniveau.

Der zweite Regelkreis 4 besteht aus: Sollwert-Vorgabe 11, Regler 12, Faktor 13, Massenverhältnis 14, Absolutwert 15 und Konstante 16. Der zweite Regelkreis 4 bestimmt den Ablauf der Lastschaltung. Eine Lastschaltung, d. h. eine Schaltung von einer ersten in eine zweite Übersetzungsstufe besteht für eine Zug-Hochschaltung aus folgenden Abschnitten: Schnellfüll-, Füllausgleichs-, Lastübernahme-, Gradienteinstell-, Gleit-, Gradientabbau- und Schließphase.

Aus den Eingangsgrößen 17 bestimmt der Funktionsblock Sollwert-Vargabe 11 den Sollwert LS_SW der Lastschaltung, das gesteuerte Moment MLS(ST) der Lastschaltung und das dynamische Moment M_DYN. Der Sollwert LS_SW wird am Summationspunkt D mit dem Istwert LS_IST der Lastschaltung verglichen. Der Istwert LS_IST bestimmt sich aus Ausgangsgrößen des Automatgetriebes 1. Die sich ergebende Regelabweichung ist die Eingangsgröße des Reglers 12. Der Reglerausgangswert entsprechend dem geregelten Moment MLS(RE) der Lastschaltung wird am Summationspunkt E zu dem dynamischen Moment M_DYN aus der Sollwert-Vorgabe 11 addiert. Hieraus ergibt sich das geregelte Summenmoment MLS(RE)' der Lastschaltung. Dieses wird am Summationspunkt F zu dem gesteuerten Moment MLS(ST) der Lastschaltung und zu dem entkoppelnden Moment der Kupplung MK_ENT addiert. Aus dem Ergebnis wird mittels des Funktionsblocks 15 der Absolutwert gebildet. Das Ergebnis wird sodann mit einer Konstanten im Funktionsblock 16 gewichtet. Diese Ausgangsgröße wird am Summationspunkt G mit einem Offset pLS_OFF beaufschlagt. Ergebnis ist der Druckwert pLS für die zuschaltende Kupplung 33 bei der Überschneidungsschaltung.

Der erste und zweite Regelkreis 3, 4 sind über ein Entkopplungsnetzwerk miteinander verbunden. Das Entkopplungsnetzwerk beinhaltet einen ersten Signalweg, in dem der Funktionsblock 7 und der Funktionsblock 8 angeordnet sind. Die Eingangsgröße des ersten Signalwegs ist das geregelte Summenmoment MK(RE)'. Dieses wird mit einem Faktor, Funktionsblock 7, multipliziert. Dieser Faktor wird aufgrund von Versuchen abgestimmt. Das Ergebnis hieraus wird im Funktiönsblock 8 mit dem Massenverhältnis von Motor-Masse zu der Summe aus Motor-Masse und Getriebe-Masse gewichtet. Ausgangsgröße ist sodann das entkoppelnde Moment MK_ENT der Kupplung 2. Der zweite Signalweg des Entkopplungsnetzwerks weist die Funktionsblöcke 13 und 14 auf, deren Eingangsgröße ist das geregelte Summenmoment MLS(RE)' der Lastschaltung. Ausgangsgröße des zweiten Signalwegs ist das entkoppelnde Moment der Lastschaltung MLS_ENT.

In Fig. 2 ist die innere Struktur der Sollwert-Vorgabe 5 dargestellt. Dieser werden die Eingangsgrößen 17 zugeführt. Im Funktionsblock 18, Sollwert-Management, wird aus den Eingangsgrößen Drehzahl der Brennkraftmaschine, Drosselklappeninformation DKI und Moment der Brennkraftmaschine ein Roh-Sollwert der Differenzdrehzahl der Kupplung 2 bestimmt. Dieser Wert wird sodann im Filter 19, üblicherweise als PT1-Glied mit Gradienten-Begrenzung ausgeführt, gefiltert. Eine Ausgangsgröße des Filters 19 ist der Sollwert dnk_SW der Differenzdrehzahl der Kupplung 2. Dieser Sollwert wird am Ausgang der Sollwert-Vorgabe 5 bereitgestellt. Eine weitere Ausgangsgröße des Filters 19 wird im Funktionsblock 20 mit dem Motorträgheitsmoment Theta-MOT und einem Faktor, Bezugszeichen 23A, verknüpft. Ausgangsgröße ist sodann das dynamische Moment der Brennkraftmaschine MDYN_MOT. Aus der Eingangsgröße Abtriebsdrehzahl der Kupplung nAB wird mittels des Funktionsblocks 21 der Winkelgeschwindigkeitsgradient dOmega/dt ermittelt. Das Ergebnis wird im Funktionsblock 22 mit dem Motorträgheitsmoment Theta-MOT und der aktuellen Übersetzung des Automatgetriebes i multipliziert. Ausgangsgröße ist das dynamische Moment MDYN_K an der Kupplung 2 während einer Lastschaltung. Hierbei gilt folgende Beziehung:

in der Gradient-Einstellphase:

$$MDYN\_K = Theta\text{-}MOT \cdot i1 \cdot dOmega/dt$$

bzw. in der Gleitphase:

$$MDYN\_K = Theta\text{-}MOT \cdot i2 \cdot dOmega/dt$$

MDYN_K:      dynamisches Moment Kupplung
Theta-MOT:   Trägheitsmoment Brennkraftmaschine
i1:          erste Übersetzungsstufe
i2:          zweite Übersetzungsstufe
dOmega/dt:   Gradient Winkelgeschwindigkeit Kupplung

Am Summationspunkt E wird sodann dieses dynamische Moment der Kupplung 2 mit dem von der Brennkraftmaschine abgegebenen Moment MMOT verknüpft. Das Ergebnis wird am Summationspunkt F zu dem zuvor berechneten dynamischen Moment der Brennkraftmaschine MDYN_MOT addiert. Das Ergebnis wird im Funktionsblock 23 mit einem abstimmbaren Faktor gewichtet, dessen Ausgangsgröße das gesteuerte Moment MK(ST) der Kupplung 2 ist.

In Fig. 3 ist die innere Struktur des Reglers 6 dargestellt. Diesem werden die Eingangsgrößen 17 sowie der Sollwert dnK_SW und der Istwert dnK_IST der Differenzdrehzahl der Kupplung 2 zugeführt. Aus dem Istwert dnK_IST wird im Funktionsblock 24 der Absolutwert gebildet. Dieser Absolutwert ist sodann die Eingangsgröße für den Teiler 27 bzw. den Summationspunkt G. Auf den Teiler 27 ist als zweite Eingangsgröße der Sollwert dnK_SW der Differenzdrehzahl der Kupplung 2 geführt. Der Quotient ist auf den Funktionsblock 28, Kennlinie dynamisches Absenken, geführt. Über diese Kennlinie wird bei sehr kleinen Schlupfwerten, z. B. kleiner 10 Umdrehungen, der Eingangswert des Intergrierers, Bezugszeichen 31, künstlich vergrößert. Hierdurch wird eine zusätzliche rampenförmige Druckreduzierung erzielt. Der Einsatzpunkt ergibt sich aus dem Verhältnis von Ist- zu Sollwert der Drehzahldifferenz der Kupplung 2.

Die Eingangsgröße Drosselklappeninformation DKI ist das Eingangssignal für ein dT1-Glied, Bezugszeichen 29. Das Ausgangssignal dieses Filters ist sodann das Eingangssignal für die Kennlinie "schnell Öffnen", Bezugszeichen 30. Über diese Kennlinie wird in Abhängigkeit der Leistungswunsch des Fahrers bzw. dessen Gradient bei schneller Gasrücknahme der Eingangswert des Integrierers 31 künstlich vergrößert. Hieraus ergibt sich eine zusätzliche rampenförmige Druckreduzierung. Die Druckreduzierung ist über die Kennlinie veränderbar.

Am Summationspunkt G wird der Sollwert dnK_SW mit dem im Funktionsblock 24 gebildeten Absolutwert des Istwertes der Differenzdrehzahl Kupplung 2 summiert. Das Ergebnis wird sodann parallel zum einen über einen Funktionsblock P-Anteil, Bezugszeichen 25, und zum zweiten über einen I-Anteil, Bezugszeichen 26, geführt. Die Ausgangsgröße des P-Anteils, Bezugszeichen 25, wirkt auf den Summationspunkt H. Die Ausgangsgröße des Funktionsblockes 26 wirkt auf den begrenzten Integrierer, Bezugszeichen 31. Der Ausgangswert des begrenzten Integrierers 31 wird am Summationspunkt H mit dem Proportional-Anteil aus dem Funktionsblock 25 verknüpft und auf den Funktionsblock 32, Wirkfaktor, geführt. Über den Wirkfaktor wird bestimmt, in welche Richtung das aktuelle Regelmoment wirken soll. Dies ist zur Bestimmung des entkoppelnden Moments MK_ENT notwendig.

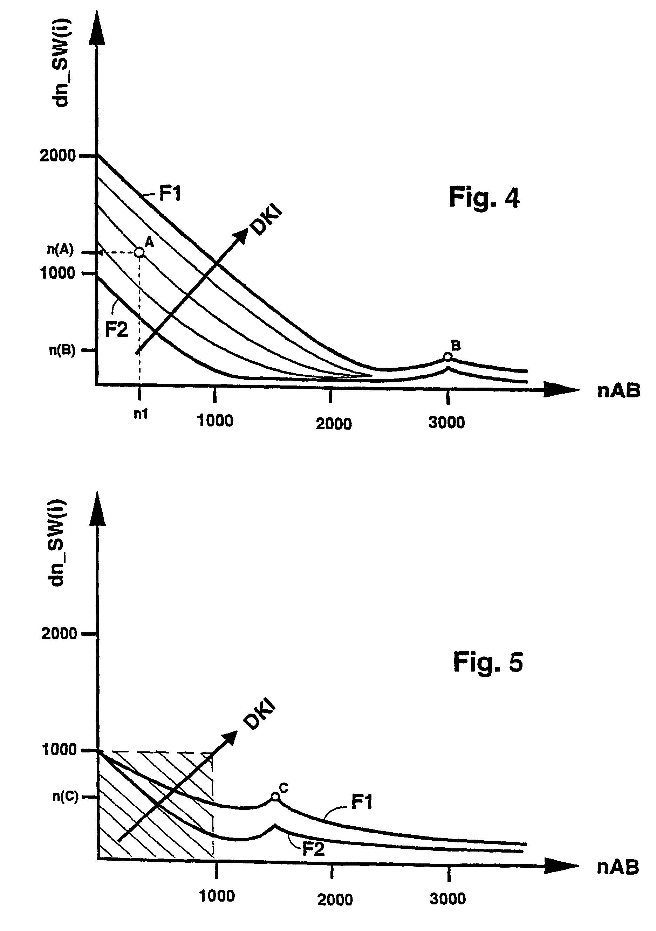

In Fig. 4 ist ein erstes Kennfeld KF1(i) des Automatgetriebes 1 dargestellt. Dieses Kennfeld wird für Anfahrgänge, also z. B. dem ersten (i = 1) oder dem zweiten (i = 2) Gang verwendet. Mittels dieses Kennfelds KF1(i) wird eine gangabhängige Differenzdrehzahl dn_SWK(i) bestimmt. Eingangsgröße des ersten Kennfelds ist die Abtriebsdrehzahl nAB der Kupplung 2 sowie die Drosselklappeninformation DKI. Innerhalb des Kennfelds ist ein durch die beiden Begrenzungslinien F1 und F2 definierter Bereich dargestellt. Die Begrenzungslinie F2 entspricht hierbei dem Drosselklappenwert 0 %. Die Begrenzungslinie F1 entspricht dem Drosselklappenwert 100 %. Innerhalb dieses Bereichs ist eine Kennlinienschar von mehreren Drosselklappenwerten dargestellt.

Der Ablauf des Verfahrens ist folgendermaßen: Aus dem aktuellen Abtriebsdrehzahlwert nAB der Kupplung 2, hier der Wert n1, und dem aktuellen Drosselklappenwert, z. B. 50 %, ergibt sich der Betriebspunkt A. Aus diesem wiederum ergibt sich der gangabhängige Differenzdrehzahlwert dnK_SW(i), hier der Wert nA. Zusätzlich ist in Fig. 4 bei einer Abtriebsdrehzahl von 3 000 Umdrehungen eine Drehzahlüberhöhung, Punkt B, eingezeichnet. Über diese Drehzahlüberhöhung n(B) wird eine Schwingungsentkopplung zwischen Brennkraftmaschine und Abtrieb des Automatgetriebes 1 erzielt. Die Lage des Punktes B bzw. der Wert n(B) ist abhängig von der verwendeten Brennkraftmaschine und wird in der Applikationsphase des Automatgetriebes definiert.

In Fig. 5 ist ein zweites gangabhängiges Kennfeld KF2(i) dargestellt. Über dieses zweite Kennfeld KF2(i) wird die Differenzdrehzahl dn_SW(i) für Nicht-Anfahrgänge, also z. B. der fünfte Gang, des Automatgetriebes bestimmt. Die Eingangs- und Ausgangsgrößen entsprechen denen des ersten Kennfelds. Das Kennfeld enthält ebenfalls einen durch die beiden Begrenzungskennlinien F1 und F2 definierten Bereich. Die Begrenzungslinie F2 entspricht 0 % und die Begrenzungslinie F1 entspricht 100 % Drosselklappeninformation DKI. Auf der Begrenzungslinie F1 ist ein Punkt C eingezeichnet. Diese Drehzahlüberhöhung, Wert n(c), bewirkt, daß die Kupplung im schlupfenden Zustand gehalten wird, so daß eine aktive Schwingungsentkopplung erzielt wird. Innerhalb des Kennfelds ist ein schraffiert gezeichneter Bereich dargestellt. Dieser Bereich dient dem Abwürgeschutz, d. h., bei kleinen Abtriebsdrehzahlen nAB der Kupplung 2 wird diese mit einem definierten Sollwert der Differenzdrehzahl beaufschlagt.

Der Abwürgeschutz kann auch gemäß folgender Beziehung berechnet werden:

$$dnK\_SW(i) > NMOT\_MIN-nAB$$

NMOT_MIN:  minimalste Drehzahl der Brennkraftmaschine
nAB:  Abtriebsdrehzahl der Kupplung 2

Das erste Kennfeld KF1(1) mit i = 1 oder 2 wird für einen Anfahrgang, also z. B. den ersten (i = 1), verwendet. Das zweite Kennfeld KF2(i), i = 3 bis n, wird für Nicht-Anfahrgänge, also z. B. den fünften (i = 5), verwendet. Für jeden Gang existiert somit ein eigenes Kennfeld. Der Übergang vom ersten KF1(1) auf ein zweites KF2(i) Kennfeld erfolgt während der Lastschaltung des Automatgetriebes 2. Dies bedeutet, daß der Verlauf der Kennlinien gemäß dem ersten Kennfeld KF1(i) aus Fig. 4 über Zwischenkennfelder auf einen Verlauf gemäß der Fig. 5 angenähert wird. Diese Zwischenkennfelder, also z. B. entsprechend dem dritten oder vierten Gang, sind nicht dargestellt.

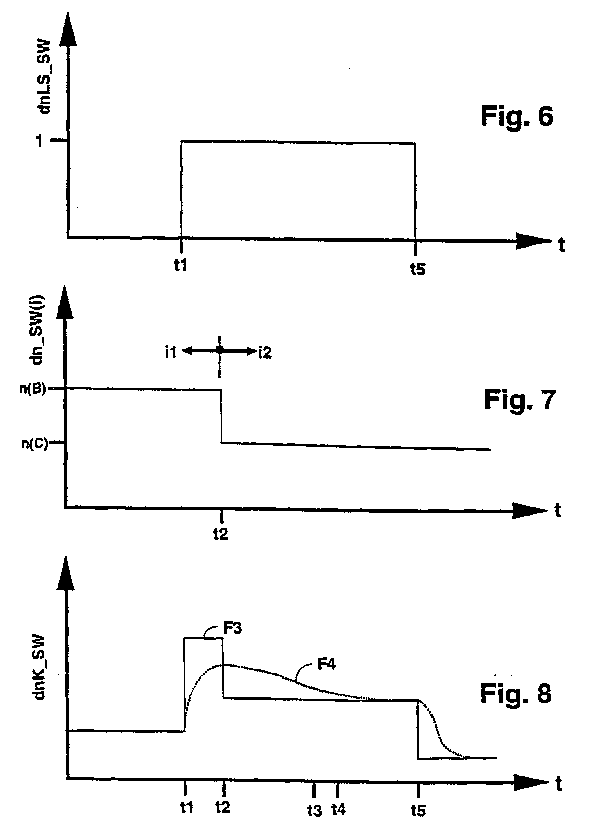

Die Fig. 6 bis 8 zeigen jeweils über der Zeit: Den Sollwert-Offset dnLS_SW, den gangabhängigen Differenzwert dn_SW(i) und den Sollwert der Differenzdrehzahl dnK_SW der Kupplung 2. Die Zeitverläufe sind für den dritten Zustand, d. h. während einer Lastschaltung von einer ersten in eine zweite Übersetzungsstufe des Automatgetriebes, dargestellt. Es wird davon ausgegangen, daß es sich um eine Lastschaltung von einem Anfahrgang in einen Nicht-Anfahrgang handelt.
In Fig. 7 sind auf der Ordinate zwei Drehzahlwerte n(B) und n(C) aufgetragen. Diese beiden Drehzahlwerte werden gemäß dem ersten Kennfeld KF1(i) aus Fig. 4 bzw. dem zweiten Kennfeld KF2(i) gemäß Fig. 5 bestimmt. Die Umschaltung vom Drehzahlwert n(B) auf den Drehzahlwert n(C) erfolgt bei Änderung des Übersetzungsverhältnisses, in Fig. 7 mit i1 und i2 bezeichnet. In Fig. 8 ist als durchgezogene Linie ein Zeitverlauf F3 ausgeführt. Dieser Verlauf entspricht der Ausgangsgröße des Funktionsblocks 18, Sollwert-Management, aus Fig. 2. Mit Bezugszeichen F4 ist der mittels des Filters 19 aus dem Verlauf F3 gewonnene Sollwert dnK_SW der Differenzdrehzahl der Kupplung 2 dargestellt. Der Verlauf F3 ergibt sich aus der Addition der Verläufe gemäß Fig. 6 und 7 zu jedem Zeitpunkt. Zum Zeitpunkt t1 wird der Sollwert-Offset dnLS_SW sprungförmig erhöht. Die gangabhängige Differenzdrehzahl dn_SW(i) zum Zeitpunkt t1 hat den Wert gemäß Fig. 4, n(B). Hieraus ergibt sich zum Zeitpunkt t1 die sprungförmige Erhöhung des Sollwertes zur Differenzdrehzahl dnK_SW der Kupplung 2. Zum Zeitpunkt t2 wird vom ersten Kennfeld KF1(i) auf ein zweites Kennfeld KF2(i) umgeschaltet, hieraus ergibt sich ein neuer Drehzahlwert n(C). Der Zeitpunkt t2 ist gleichbedeutend mit dem Ende der Gradient-Einstellphase und Beginn der Gleitphase. Die Gleitphase endet zum Zeitpunkt t3. Während des Zeitraums t3 bis t4 erfolgt die Gradient-Abbauphase. Im Zeitraum t4 bis t5 erfolgt die Schließphase der zuschaltenden Kupplung 33. Zum Zeitpunkt t5 wird gemäß Fig. 6 der Sollwert-Offset auf Null reduziert. Hieraus ergibt sich gemäß Fig. 8 ebenfalls eine Reduktion des Sollwertes der Differenzdrehzahl dnK_SW der Kupplung 2. Im ersten und zweiten Zustand, d. h. im Anfahrvorgang bzw. dem Fahren mit konstanter Übersetzung, entspricht der Sollwert der Differenzdrehzahl dnK_SW der Kupplung 2 dem gangabhängigen Differenzdrehzahlwert dn_SW(1):

Der Ablauf des erfindungsgemäßen Verfahrens ist folgendermaßen:
Im ersten Zustand, also im Anfahrvorgang, wird mittels des ersten Kennfelds KF1(i) der gangabhängige Differenzdrehzahlwert dn_SW(i) bestimmt. Dieser entspricht dem Sollwert der Differenzdrehzahl dnK_SW der Kupplung 2, da der Sollwert-Offset dnLS_SW Null ist. Mit sich erhöhender Abtriebsdrehzahl nAB der Kupplung 2 wird gemäß Fig. 4 dieser Sollwert reduziert. Hierbei kann, wie bei Fig. 4 ausgeführt, zur Erhöhung des Komfort ein höherer Sollwert eingestellt werden, um eine Schwingungsentkopplung zu erreichen. Wird nun eine Lastschaltlung initiiert, so wird vom ersten Kennfeld KF1(i) auf ein zweites Kennfeld KF2(i) gemäß Fig. 5 gewechselt. Hieraus resultiert dann ein Ablauf gemäß den Fig. 6 bis 8. Während der Lastschaltung wird über das Entkopplungsnetzwerk via zweitem Signalweg dem gesteuerten MK(ST) und geregelten Summenmoment MK(RE)' ein Entkopplungsmoment MLS_ENT der Lastschaltung addiert. Via dem ersten Signalweg wird der zuschaltenden Kupplung ein Entkopplungsmoment MK_ENT der Kupplung 2 addiert.

Bezugszeichen

| 1 | Automatgetriebe |
|---|---|
| 2 | Kupplung |
| 3 | erster Regelkreis |
| 4 | zweiter Regelkreis |
| 5 | Sollwert-Vorgabe |
| 6 | Regler |
| 7 | Faktor |
| 8 | Berechnungsblock Massenverhältnis |
| 9 | Absolutwert |
| 10 | Konstante |
| 11 | Sollwert-Vorgabe |
| 12 | Regler |
| 13 | Faktor |
| 14 | Berechnungsblock: Massenverhältnis |
| 15 | Absolutwert |
| 16 | Konstante |
| 17 | Eingangsgrößen |
| 18 | Sollwert-Management |
| 19 | Filter |
| 20 | Trägkeitsmoment |
| 21 | Berechnungsblock dOmega/dt |
| 22 | Berechnungsblock |
| 23, 23A | Faktor |
| 24 | Absolutwert |
| 25 | P-Anteil |
| 26 | I-Anteil |
| 27 | Teiler |
| 28 | Kennlinie dynamisches Absenken |
| 29 | dT1-Glied |
| 30 | Kennlinie "schnell Öffnen" |
| 31 | begrenzter Intergrierer |
| 32 | Wirkfaktor |
| 33 | zuschaltende Kupplung bei Lastsschaltung |

| dn_SW(i) | gangabhängige Differenzdrehzahl |
|---|---|
| dnK_SW | Sollwert Differenzdrehzahl Kupplung |
| dnK_IST | Istwert Differenzdrehzahl Kupplung |
| MK(ST) | gesteuertes Moment Kupplung |
| MK(RE) | geregeltes Moment Kupplung |
| MK_ENT | entkoppelndes Moment Kupplung |
| pAK_OFF | Druckoffset Anfahrkupplng |
| pSUM | summmierter Druck |
| pAK | Druckniveau Kupplung |
| MDYN_K | dynamisches Moment Kupplung |
| pLS_OFF | Druckoffset Lastschaltung |
| nAB | Abtriebsdrehzahl Kupplung |
| LS_SW | Sollwert Lastschaltung |
| LS_IST | Istwert Lastschaltung |
| MLS(ST) | gesteuertes Moment Lastschaltung |
| MLS(RE) | geregeltes Moment Lastschaltung |
| MLS(RE)' | geregeltes Summenmoment Lastschaltung |
| MLS_ENT | entkoppelndes Moment Lastschaltung |
| MMOT | Motormoment |
| MDYN_MOT | dynamisches Motormoment |
| DKI | Drosselklappeninformation = Laststellung |
| dnLS_SW | Sollwert-Offset |

**Patentansprüche**

1. Verfahren zum Steuern und Regeln einer Kupplung (2) in einem Kraftfahrzeugantrieb, bei dem ein elektronisches Steuergerät mittels eines ersten Regelkreises (3) das Verhalten der Kupplung (2) während drei Fahrzuständen bestimmt, wobei die Regelgröße dem Istwert einer Differenzdrehzahl (dnK_IST) der Kupplung (2) äquivalent ist, der erste Zustand einem Anfahrvorgang entspricht, der zweite Zustand dem Fahren mit konstanter Übersetzung (i = const) entspricht und der dritte Zustand dann vorliegt, wenn eine Lastschaltung von einer ersten (i1) in eine zweite Ubersetzungsstufe (i2) eines Automatgetriebes (1) initiiert wird, **dadurch gekennzeichnet, daß** die Lastschaltung von einer ersten (i1) in eine zweite Übersetzungsstufe (i2) des Automatgetriebes (1) maßgeblich von einem zweiten Regelkreis (4) bestimmt wird und der erste (3) und zweite Regelkreis (4) über ein Entkopplungsnetzwerk (7, 8, 13, 14) miteinander verbunden sind.

2. Verfahren nach Anspruch 1, **dadurch gekennzeichnet, daß** das Entkopplungsnetzwerk einen ersten (7, 8) und zweiten Signalweg (13, 14) aufweist.

3. Verfahren nach Anspruch 1 oder 2, **dadurch gekennzeichnet, daß** bei einer Lastschaltung von einer ersten (i1) in eine zweite Übersetzungsstufe (i2) des Automatgetriebes (1) der erste Regelkreis (3) mittels des Entkopplungsnetzwerkes via erstem Signalweg (7, 8) auf den zweiten Regelkreis (4) einwirkt (MK_ENT) und der zweite Regelkreis (4) mittels des Entkopplungsnetzwerkes via zweitem Signalweg (13, 14) auf den ersten Regelkreis (3) einwirkt (MLS_ENT).

4. Verfahren nach Anspruch 3, **dadurch gekennzeichnet, daß** während einer Lastschaltung von einer ersten (i1) in eine zweite Übersetzungsstufe (i2) des Automatgetriebes (1) der zweite (4) auf den ersten Regelkreis (3) ausschließlich in der Lastübernahme-, Gradienteinstell-, Gleit-, Gradientabbau- und Schließphase einwirkt.

5. Verfahren nach einem der vorausgegangenen Ansprüche, **dadurch gekennzeichnet, daß** das Druckniveau (pAK) der Kupplung (2) sich aus einem Offsetwert (pAK_OFF) und einem Summenwert (pSUM) ergibt (pAK = pAK_OFF + pSUM), wobei der Summenwert (pSUM) maßgeblich aus der Bilanz von gesteuertem (MK(ST)) der Kupplung (2), geregeltem Summenmoment (MK(RE)') der Kupplung (2) und entkoppelndem Lastschaltmoment (MLS_ENT) bestimmt wird (pSUM = f(MK(ST), MK(RE)', MLS_ENT)).

6. Verfahren nach Anspruch 5, **dadurch gekennzeichnet, daß** das gesteuerte Moment (MK(ST)) sich maßgeblich aus dem dynamischen Moment der Kupplung (MDYN_K) und dem Motormoment (MMOT) bestimmt wird (MK(ST) = f(MDYN_K, MMOT).

7. Verfahren nach Anspruch 5, **dadurch gekennzeichnet, daß** das geregelte Summenmoment (MK(RE)') der Kupplung (2) aus dem dynamischen Motormoment (MDYN_MOT) und einem geregelten Moment (MK(RE)) der Kupplung (2) bestimmt wird.

8. Verfahren nach Anspruch 5, **dadurch gekennzeichnet, daß** das entkoppelnde Lastschaltmoment (MLS_ENT) sich aus einem dynamischen Moment (M_DYN) und einem geregelten Summenmoment (MLS(RE)) sowie einem Massenverhältnis Motor/Automatgetriebe (14) und einem Faktor (13) ergibt.

9. Verfahren nach Anspruch 3, **dadurch gekennzeichnet, daß** das entkoppelnde Moment (MK_ENT) der Kupplung (2) sich aus der Summe von dynamischem Motormoment (MDYN_MOT) und geregeltem Moment (MK(RE)) der Kupplung (2) sowie einem Massenverhältnis Motor/Automatgetriebe (8) und einem Faktor (7) ergibt.

10. Verfahren nach Anspruch 7, **dadurch gekennzeichnet, daß** das geregelte Moment (MK(RE)) maß-, geblich aus dem Soll-/Ist-Vergleich der Drehzahldifferenz (dnK_SW, dnK_IST) der Kupplung (2) und einer Leistungsvorgabe (DKI) eines Fahrers mittels eines Reglers (6) bestimmt wird.

11. Verfahren nach Anspruch 10, **dadurch gekennzeichnet, daß** der Regler (6) einen begrenzten Integrator (31) beinhaltet, wobei dem Integrator (31) als Eingangsgrößen die Regelabweichung aus dem Soll-/Ist-Vergleich der Drehzahldifferenz (dnK_SW, dnK_IST) der Kupplung (2), die Verstellgeschwindigkeit der Leistungsvorgabe (DKI) und des Verhältnis Ist- zu Sollwert der Differnzdrehzahl (dnK_IST/dnK_SW) der Kupplung (2) zugeführt wird.

12. Verfahren nach einem der vorausgegangenen Ansprüche, **dadurch gekennzeichnet, daß** für alle drei Zustände sich der Sollwert der Differenzdrehzahl (dnK_SW) der Kupplung (2) aus der Addition eines Sollwert-Offset (dnLS_SW) und einer gangabhängigen Differenzdrehzahl (dn_SW(i)) der Kupplung (2) ergibt.

13. Verfahren nach Anspruch 12, **dadurch gekennzeichnet, daß** die gangabhängige Differenzdrehzahl (dn_SW(i)) für einen Anfahrgang des Automatgetriebes über ein erstes Kennfeld (KF1(i), i = 1, 2) bestimmt wird, wobei dieses eine Zuordnung von Leistungsvorgabe des Fahrers (DKI) und Abtriebsdrehzahl (nAB) der Kupplung (2) darstellt.

14. Verfahren nach Anspruch 12, **dadurch gekennzeichnet, daß** die gangabhängige Differenzdrehzahl (dn_SW(i)) für Nichtanfahrgänge des Automatgetriebes über zweite Kennfelder (KF(i), i = 3...n) bestimmt wird, wobei diese eine Zuordnung von Leistungsvorgabe des Fahrers (DKI) und der Abtriebsdrehzahl (nAB) der Kupplung (2) darstellt.

15. Verfahren nach Anspruch 12, **dadurch gekennzeichnet, daß** im dritten Zustand der Sollwert-Offset der Differenzdrehzahl (dnLS_SW) der Kupplung (2) während der Lastschaltung von einer ersten (i1) in eine zweite Übersetzungsstufe (i2) des Automatgetriebes (1) in der Lastübernahme- oder Gradienteinstellphase erhöht und mit Beendigung der Schießphase wieder reduziert wird.

16. Verfahren nach Anspruch 12, **dadurch gekennzeichnet, daß** die Umschaltung von erstem Kennfeld (KF1) auf ein zweites Kennfeld (KF(i)) während der Lastschaltung am Ende der Gradienteinstellphase erfolgt.

17. Verfahren nach Anspruch 14, **dadurch gekennzeichnet, daß** bei einer Fahrzeuggeschwindigkeit (v) kleiner einem Grenzwert (GW) eine erhöhte Differenzdrehzahl (dn_SW(i)) der Kupplung als Abwürgeschutz über das jeweilige zweite Kennfeld (KF(i)) eingestellt wird.

18. Verfahren nach Anspruch 14, **dadurch gekennzeichnet, daß** im zweiten Zustand bei einer Fahrzeuggeschwindigkeit (v) kleiner einem Grenzwert (GW) eine erhöhte Differenzdrehzahl (dn_SW(i)) der Kupplung als Abwürgeschutz gemäß folgender Beziehung berechnet wird:

$$dn\_SW(i) > NMOT\_MIN-nAB$$

NMOT_MIN: Minimalste Drehzahl Brennkraftmaschine
nAB: Abtriebsdrehzahl der Kupplung (2)

19. Verwendung des Verfahrens zum Steuern und Regeln einer Kupplung nach einem der Ansprüche 1 bis 18 in einem automatisch lastschaltbaren Stufengetriebe für ein Kraftfahrzeug.

**Claims**

1. Method for controlling and regulating a clutch (2) in a motor vehicle drive, in which an electronic control mechanism determines the behaviour of the clutch (2) by means of a first control loop (3) during three driving states, wherein the control variable is equivalent to the actual value of a differential speed (dnK_IST) of the clutch (2), the first state corresponds to a starting procedure, the second state corresponds to driving with a constant transmission ratio (i = constant) and the third state exists when a change-under-load from a first (i1) to a second transmission step (i2) of an automatic transmission (1) is initiated, **characterised in that** the change-under-load from a first (i1) to a second transmission step (i2) of the automatic transmission (1) is substantially determined by a second control loop (4), and the first (3) and second control loop (4) are connected together via an uncoupling network (7, 8, 13, 14).

2. Method according to Claim 1, **characterised in that** the uncoupling network comprises a first (7, 8) and a second signal path (13, 14).

3. Method according to Claim 1 or 2, **characterised in that**, when a change-under-load from a first (i1) to a second transmission step (i2) of the automatic transmission (1) takes place, the first control loop (3) acts by means of the uncoupling network via the first signal path (7, 8) on the second control loop (4) (MK_ENT), and the second control loop (4) acts by means of the uncoupling network via the second signal path (13, 14) on the first control loop (3) (MLS_ENT).

4. Method according to Claim 3, **characterised in that**, during a change-under-load from a first (i1) to a second transmission step (i2) of the automatic transmission (1), the second (4) acts on the first control loop (3) solely in the load take-over, gradient adjustment, slip, gradient reduction and closing phase.

5. Method according to any one of the preceding Claims, **characterised in that** the pressure level (pAK) of the clutch (2) results from an offset value (pAK_OFF) and a cumulative value (pSUM) (pAK = pAK_OFF + pSUM), wherein the cumulative value (pSUM) is substantially determined from the balance of the controlled (MK(ST)) of the clutch (2), regulated cumulative torque (MK(RE)') of the clutch (2) and uncoupled change-under-load torque (MLS_ENT)) (pSUM = f(MK(ST), MK(RE)', MLS_ENT)).

6. Method according to Claim 5, **characterised in that** the controlled torque (MK(ST)) is substantially determined from the dynamic torque of the clutch (MDYN_K) and the engine torque (MMOT) (MK(ST) = f(MDYN_K, MMOT).

7. Method according to Claim 5, **characterised in that** the regulated cumulative torque (MK(RE)') of the clutch (2) is determined from the dynamic engine torque (MDYN_MOT) and a regulated torque (MK(RE)) of the clutch (2).

8. Method according to Claim 5, **characterised in that** the uncoupled change-under-load torque (MLS_ENT) results from a dynamic torque (M_DYN) and a regulated cumulative torque (MLS(RE)) as well as an engine/automatic transmission mass ratio (14) and a factor (13).

9. Method according to Claim 3, **characterised in that** the uncoupled torque (MK_ENT) of the clutch (2) results from the sum of the dynamic engine torque (MDYN_MOT) and regulated torque (MK(RE)) of the clutch (2) as well as an engine/automatic transmission mass ratio (8) and a factor (7).

10. Method according to Claim 7, **characterised in that** the regulated torque (MK(RE)) is determined substantially from the desired/actual comparison of the speed difference (dnK_SW, dnK_IST) of the clutch (2) and a performance requirement (DKI) of a driver by means of a regulator (6).

11. Method according to Claim 10, **characterised in that** the regulator (6) includes a limited integrator (31), wherein the system deviation arising from the desired/actual comparison of the speed difference (dnK_SW, dnK_IST) of the clutch (2), the adjustment speed of the performance requirement (DKI) and the ratio of actual to desired value of the differential speed (dnK_IST/dnK_SW) of the clutch (2) is fed as input variables to the integrator (31).

12. Method according to any one of the preceding Claims, **characterised in that** the desired value of the differential speed (dnK_SW) of the clutch (2) results from the addition of a desired value offset (dnLS_SW) and a gear-dependent differential speed (dn_SW(i)) of the clutch (2) for all three states.

13. Method according to Claim 12, **characterised in that** the gear-dependent differential speed (dn_SW(i)) for a starting gear of the automatic transmission is determined via a first characteristic diagram (KF1 (i), i = 1, 2), wherein this represents an association of the performance requirement of the driver (DKI) and the output speed (nAB) of the clutch (2).

14. Method according to Claim 12, **characterised in that** the gear-dependent differential speed (dn_SW (i)) for non-starting gears of the automatic transmission is determined via second characteristic diagrams (KF1(i), i = 3...n), wherein this represents an association of the performance requirement of the driver (DKI) and the output speed (nAB) of the clutch (2).

15. Method according to Claim 12, **characterised in that** in the third state the desired value offset of the differential speed (dnLS_SW) of the clutch (2) during the change-under-load is increased from a first (i1) to a second transmission step (i2) of the automatic transmission (1) in the load take-over or gradient adjustment phase and reduced again upon termination of the closing phase.

16. Method according to Claim 12, **characterised in that** the change-over from the first characteristic diagram (KF1) to a second characteristic diagram (KF (i)) during the change-under-load takes place at the end of the gradient adjustment phase.

17. Method according to Claim 14, **characterised in that**, when the vehicle speed (v) is lower than a limit value (GW), an increased differential speed (dn_SW(i)) of the clutch is set as protection against stalling via the respective second characteristic diagram (KF(i)).

18. Method according to Claim 14, **characterised in that** in the second state, when the vehicle speed (v) is lower than a limit value (GW), an increased differential speed (dn_SW(i)) of the clutch is calculated as protection against stalling according to the following relation:

$$dn\_SW(i) > NMOT\_MIN-nAB$$

MMOT_MIN : minimum speed of internal combustion engine
nAB: output speed of clutch (2)

19. Use of the method for controlling and regulating a clutch according to any one of Claims 1 to 18 in a continuously variable transmission which can be automatically changed under load for a motor vehicle.

**Revendications**

1. Procédé pour commander et régler un embrayage (2) dans un entraînement de véhicule automobile dans lequel un appareil de commande électronique détermine le comportement de l'embrayage (2) au moyen d'un premier circuit de régulation (3) pendant au moins trois états de conduite, la grandeur réglée étant équivalente à la valeur réelle (dnK_IST) de l'embrayage (2), qui correspond au premier état d'un processus de démarrage, le deuxième état correspondant à la conduite avec rapport de transmission constant (i = const) et le troisième étant présent lorsqu'un transfert de charge d'un premier (i1) à un deuxième étage (i2) de rapport de transmission d'une boîte de vitesses automatique (1) est déclenché, **caractérisé en ce que** le transfert de la charge d'un premier (i1) à un deuxième étage (i2) de rapport de transmission de la boîte de vitesses automatique (1) est déterminé de façon prédominante par un deuxième circuit de régulation (4), et le premier (3) et le deuxième (4) circuit de régulation sont reliés l'un à l'autre par l'intermédiaire d'un réseau de découplage (7, 8, 13, 14).

2. Procédé selon la revendication 1, **caractérisé en ce que** le réseau de découplage comprend un premier (7, 8) et un deuxième (13, 14) trajet de signaux.

3. Procédé selon la revendication 1 ou 2, **caractérisé en ce que**, dans le cas d'un transfert de la charge d'un premier (i1) à un deuxième étage (i2) de rapport de transmission de la boîte de vitesses automatique (1), le premier circuit de régulation (3) agit sur le deuxième circuit de régulation (4) (MK_ENT) au moyen du circuit de découplage, par l'intermédiaire du premier trajet de signaux (7, 8) et le deuxième circuit de régulation (4) agit sur le premier circuit de régulation (3) (MLS_ENT) au moyen du réseau de découplage, par l'intermédiaire du deuxième trajet de signaux (13, 14).

4. Procédé selon la revendication 3, **caractérisé en ce que**, pendant un transfert de la charge d'un premier (i1) à un deuxième étage (i2) de rapport de transmission de la boîte de vitesses automatique (1), le deuxième circuit de régulation (4) agit sur le premier (3) exclusivement dans la phase de prise de la charge, établissement du gradient, glissement, réduction du gradient et fermeture.

5. Procédé selon l'une des revendications précédentes, **caractéri- sé en ce que** le niveau de pression (pAK) de l'embrayage (2) est déterminé sur la base d'une valeur offset (pAK_OFF) et d'une valeur somme (pSUM), (pAK = pAK_OFF + pSUM) où la valeur somme (pSUM) est déterminée de façon prédominante par la balance du couple somme commandé (MK(ST)) de l'embrayage (2), du couple somme réglé (MK(RE)') de l'embrayage (2) et du couple de transfert de charge découplant (MLS_ENT) : (pSUM = f (MK(ST), MK(RE)', (MLS_ENT)).

6. Procédé selon la revendication 5, **caractérisé en ce que** le couple commandé (MK(ST)) est déterminé de façon prédominante sur la base du couple dynamique de l'embrayage (MDYN_K) et du couple moteur (MMOT) : (MK(ST) = f (MDYN_K, MMOT).

7. Procédé selon la revendication 5, **caractérisé en ce que** le couple somme réglé (MK(RE)') de l'embrayage (2) est déterminé sur la base du couple moteur dynamique (MDYN_MOT) et d'un couple réglé (MK(RE)) de l'embrayage (2).

8. Procédé selon la revendication 5, **caractérisé en ce que** le couple de transfert de charge découplant (MLS_ENT) est déterminé sur la base d'un couple dynamique (M_DYN) et d'un couple somme réglé (MLS(RE)) ainsi que d'un rapport de masse moteur/ boîte de vitesses automatique (14) et d'un facteur (13).

9. Procédé selon la revendication 3, **caractérisé en ce que** le couple découplant (MK_ENT) de l'embrayage (2) est déterminé sur la base de la somme du couple moteur dynamique (MDYN_MOT) et du couple réglé (MK(RE)) de l'embrayage (2) ainsi que d'un rapport de masse moteur/boîte de vitesses automatique (8) et d'un facteur (7).

10. Procédé selon la revendication 7, **caractérisé en ce que** le couple réglé (MK(RE)) est déterminé de façon prédominante sur la base de la comparaison consigne/réelle de la différence de vitesse de rotation (dnK_SW, dnK_IST) de l'embrayage (2) et d'une demande de puissance (DKI) d'un conducteur au moyen d'un régulateur (6).

11. Procédé selon la revendication 10, **caractérisé en ce que** le régulateur (6) renferme un intégrateur limité (31), l'écart de régulation tiré de la comparaison consigne/réelle de la différence de vitesse de rotation (dnK_SW, dnK_IST) de l'embrayage (2), la vitesse de correction de la demande de puissance (DKI) et le rapport valeur réelle/valeur de consigne de la vitesse de rotation différentielle (dnK_IST/ dnK_SW) de l'embrayage (2) étant transmis à l'intégrateur (31) en tant que grandeurs d'entrée.

12. Procédé selon l'une des revendications précédentes, **caractérisé en ce que**, pour tous les trois états de conduite, on obtient la valeur de consigne de la vitesse de rotation différentielle (dnK_SW) de l'embrayage (2) sur la base de l'addition d'une valeur de consigne-offset (dnLS_SW) et d'une vitesse de rotation différentielle de l'embrayage (2) qui est fonction du rapport (dn_SW(i)).

13. Procédé selon la revendication 12, **caractérisé en ce que** la vitesse de rotation différentielle (dn-SW (i)) fonction du rapport est déterminée pour un rapport de démarrage de la boîte de vitesses automatique au moyen d'un premier diagramme (KF1(i), i = 1, 2), ce diagramme représentant une relation entre la demande de puissance du conducteur (DKI) et la vitesse de rotation de sortie (nAB) de l'embrayage (2).

14. Procédé selon la revendication 12, **caractérisé en ce que** la vitesse de rotation différentielle (dn-SW (i)) fonction du rapport est déterminée pour des rapports de non-démarrage de la boîte de vitesses automatique au moyen de deuxièmes diagrammes (KF(i), i = 3...n), ce diagramme représentant une relation entre la demande de puissance du conducteur (DKI) et la vitesse de rotation de sortie (nAB) de l'embrayage (2).

15. Procédé selon la revendication 12, **caractérisé en ce que**, dans le troisième état, pendant le transfert de la charge d'un premier (i1) à un deuxième étage (i2) de rapport de transmission de la boîte de vitesses automatique (1), l'offset de valeur de consigne de la vitesse de rotation différentielle (dnLS_SW) de l'embrayage (2) est augmenté pendant la phase de prise de la charge ou d'établissement du gradient et de nouveau diminué au moment de l'achèvement de la phase de fermeture.

16. Procédé selon la revendication 12, **caractérisé en ce que** le passage du premier diagramme (KF1) à un deuxième diagramme (KF(i)) se produit pendant le transfert de charge, à la fin de la phase d'établissement du gradient.

17. Procédé selon la revendication 14, **caractérisé en ce qu'**à une vitesse du véhicule (v) inférieure à une valeur limite (GW), une vitesse de rotation différentielle plus grande (dn_SW(i)) de l'embrayage est établie en tant que protection anticalage au moyen du diagramme (KF(i)) qui est le deuxième au moment considéré.

18. Procédé selon la revendication 14, **caractérisé en ce que**, dans le deuxième état, à une vitesse du véhicule (v) inférieure à une valeur limite (GW), une vitesse de rotation différentielle plus grande (dn_SW(i)) de l'embrayage est calculée en tant que protection anticalage en appliquant la relation suivante :

dn_SW(i) > NMOT_MIN-nAB

NMOT_MIN :   vitesse de rotation minimale du moteur à combustion interne

nAB :   vitesse de rotation de sortie de l'embrayage (2).

**19.** Emploi du procédé pour commander et régler un embrayage selon l'une des revendications 1 à 18 dans une transmission à rapports échelonnés à transfert de charge automatique pour un véhicule automobile.

Fig. 1

**Fig. 2**

**Fig. 3**

Fig. 4

Fig. 5

Fig. 6

Fig. 7

Fig. 8